# EUROPEAN PATENT SPECIFICATION

(11) **EP 3 307 524 B1**
(45) Date of publication and mention of the grant of the patent: **09.10.2024**
(21) Application number: 16735750.8
(22) Date of filing: 11.06.2016
(51) Int. Cl.: B29C 64/393, B29C 64/153, B33Y 50/02, B33Y 10/00, B22F 10/85, G01N 25/72

(54) **SYSTEM AND METHOD FOR ENSURING CONSISTENCY IN ADDITIVE MANUFACTURING USING THERMAL IMAGING**
SYSTEM UND VERFAHREN ZUR SICHERSTELLUNG DER KONSISTENZ IN DER GENERATIVEN FERTIGUNG MITTELS THERMISCHER BILDGEBUNG
SYSTÈME ET PROCÉDÉ PERMETTANT DE GARANTIR LA COHÉRENCE EN FABRICATION ADDITIVE UTILISANT L'IMAGERIE THERMIQUE

(30) Priority: 12.06.2015 US 201562174840 P
(43) Date of publication of application: 18.04.2018
(73) Proprietor: Materialise NV, 3001 Leuven (BE)
(72) Inventor: COECK, Sam, 3001 Leuven (BE); VAN DEN ECKER, Piet, 3001 Leuven (BE); KUYPERS, Tristan, 3001 Leuven (BE); JANSSENS, Michel, 3001 Leuven (BE); CRAEGHS, Tom, 3001 Leuven (BE)
(74) Representative: DeltaPatents B.V.
(86) International application number: PCT/US2016/037111
(87) International publication number: WO 2016/201390

(56) References cited:
- EP-A2- 1 466 718
- EP-B1- 1 466 718
- US-A1- 2013 168 902

## Description

### CROSS-REFERENCE TO RELATED APPLICATIONS

This application claims the benefit of U.S. Provisional Patent Application No. 62/174,840, filed June 12, 2015.

### BACKGROUND OF THE INVENTION

### Field of the Invention

This application relates to maintaining consistency in parts produced by additive manufacturing. More specifically, this application relates to systems and methods for ensuring consistency of parts by using time-synchronized thermal images, to assess part quality.

### Description of the Related Technology

As technological advancements are made in the field of additive manufacturing, it is become a viable production method for mass production of customized parts. As a result, part conformity in additive manufacturing is an important issue. In many situations, current additive manufacturing techniques do not provide reliable and efficient ways to ensure that parts produced are without structural defects. One current technique for ensuring part quality is to inspect the part after it has been manufactured, using for instance visual inspection, computed tomography or destructive testing. However, such inspection techniques are time consuming and expensive. In some cases, stress testing may also be performed on the part to determine whether the part meets quality assurance standard. Stress testing is also labor-intensive, and it adds even more inefficiency to the manufacturing process. Additionally, stress testing can be destructive or have an unknown influence on the reliability of the manufactured product. These effects are best avoided, as they are costly and do not ensure and can even compromise the integrity of the manufactured product. Accordingly, improved techniques for assessing part quality are needed in additive manufacturing environments.

Document EP 1 466 718 A2 discloses, according to its abstract, a method and an apparatus for forming three dimensional objects by laser sintering that utilize a broad area thermal vision system such as an infrared camera that can measure multiple temperatures across the target area and use that temperature data as feed back to a control system that both adjusts a zoned radiant heater system and adjusts scan speed and laser power to control temperatures across the target area.

Document US 2013/0168902 A1 discloses, according to its abstract, a method for producing a three-dimensional component by means of a laser melting process, in which the component is produced by consecutively solidifying individual layers made of building material by melting the building material, wherein said building material can be solidified by the action of radiation, wherein the melting area produced by a punctiform and/or linear energy input is detected by a sensor device and sensor values are derived therefrom in order to evaluate the component quality. The sensor values detected in order to evaluate the component quality are stored together with the coordinate values that locate the sensor values in the component and are displayed by means of a visualization unit in two- and/or multi-dimensional representation with respect to the detection location of the sensor values in the component.

### SUMMARY

In one embodiment, a quality control system for assessing quality of a manufactured part in an additive manufacturing apparatus is provided, according to claim 1.

In another embodiment, a method of for assessing quality of a part manufactured in an additive manufacturing apparatus is provided, according to claim 7.

### BRIEF DESCRIPTION OF THE DRAWINGS

Figure 1 is an example of a system for designing and manufacturing 3D objects.
Figure 2 illustrates a functional block diagram of one example of the computer shown in FIG. 1.
Figure 3 shows a high level process for manufacturing a 3D object using a laser scanning system.
Figure 4A is an example of a laser scanning system suitable for implementing various embodiments disclosed herein.
Figure 4B provides an example of how a thermal camera may be added to the laser scanning system of Figure 4A in order to practice various embodiments disclosed herein.
Figure 5 is a flow chart showing a high level process for determining whether a manufactured part is conformal to the quality of a master model.
Figures 6A and 6B are flowcharts showing a more detailed view of how a thermal history for a manufactured part may be determined.
Figures 7A and 7B are flowcharts illustrating a more detailed process for utilizing build process data and thermal imaging to create a thermal history for a manufactured part.
Figure 8A is an example of a thermal history curve for a manufactured part.
Figure 8B depicts the thermal history curve from Figure 8A with a thermal history from a master model super imposed based on absolute time measurements.

### DETAILED DESCRIPTION OF CERTAIN INVENTIVE EMBODIMENTS

Embodiments set forth in this application relate to systems and methods by which parts produced by additive manufacturing can be reliably assessed for conformity to a known "master" part (also referred to herein as a "master model") which has quality conforming to the desired specifications. One advantage that additive manufacturing has over traditional production methods for parts is that it is possible to inspect the future parts during the actual build process. In particular, it is physically possible to look inside the part as the part is being built. Manufacturing data gathered this way may include information about the quality of the resulting part. The inventors have recognized that in many additive manufacturing techniques the quality of the produced object depends heavily on the thermal effects that have impacted each part of the object. Thus, the inventors have devised systems and methods which use the thermal history of each point of the object to assess the object for manufacturing quality.

These systems and methods involve recording a thermal history of the manufacturing process of each part. The recorded thermal history is then compared to the previously-recorded thermal history of the master model. Significant deviations in thermal history are indicative of irregularities in the manufacturing build, and the part quality may then be assessed in view of those irregularities. By comparing the thermal history of the part against the master model, non-confirming parts may be detected without the need for a detailed and time-consuming visual inspection. Depending upon the specific implementation, the thermal history of the master model may be the data recorded during printing of one single part. Alternatively, it may be values (such as average or median values) related to the data captured during the manufacture of several parts having quality conforming to certain desired specifications.

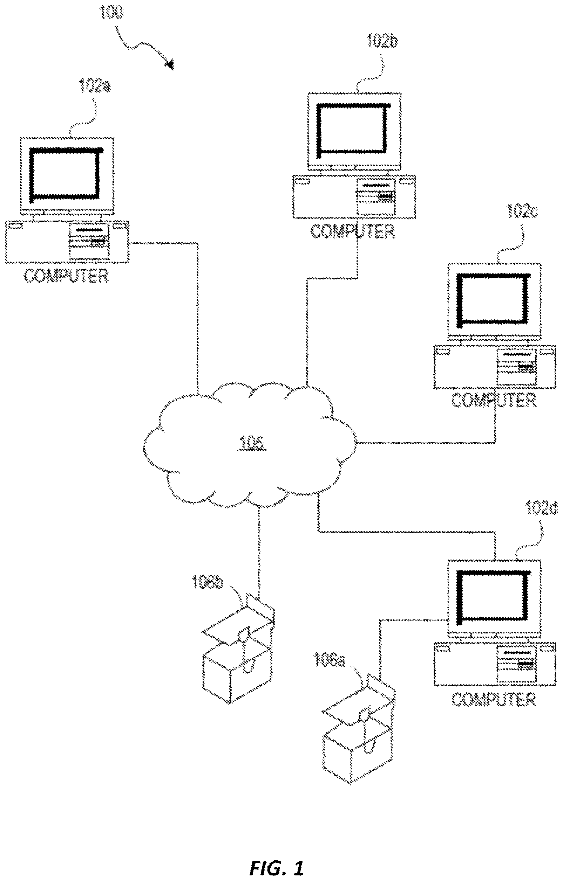

Embodiments of the invention may be practiced within a system for designing and manufacturing 3D objects. Turning to Figure 1, an example of a computer environment suitable for the implementation of 3D object design and manufacturing is shown. The environment includes a system 100. The system 100 includes one or more computers 102a-102d, which can be, for example, any workstation, server, or other computing device capable of processing information. In some aspects, each of the computers 102a-102d can be connected, by any suitable communications technology (e.g., an internet protocol), to a network 105 (e.g., the Internet). Accordingly, the computers 102a-102d may transmit and receive information (e.g., software, digital representations of 3-D objects, commands or instructions to operate an additive manufacturing device, etc.) between each other via the network 105.

The system 100 further includes one or more additive manufacturing devices (e.g., 3-D printers) 106a-106b. As shown the additive manufacturing device 106a is directly connected to a computer 102d (and through computer 102d connected to computers 102a-102c via the network 105) and additive manufacturing device 106b is connected to the computers 102a-102d via the network 105. Accordingly, one of skill in the art will understand that an additive manufacturing device 106 may be directly connected to a computer 102, connected to a computer 102 via a network 105, and/or connected to a computer 102 via another computer 102 and the network 105. It should be noted that though the system 100 is described with respect to a network and one or more computers, the techniques described herein also apply to a single computer 102, which may be directly connected to an additive manufacturing device 106.

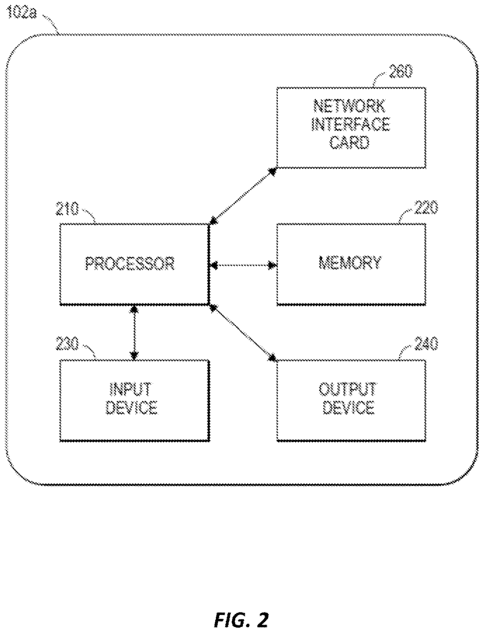

FIG. 2 illustrates a functional block diagram of one example of a computer of FIG. 1. The computer 102a includes a processor 210 in data communication with a memory 220, an input device 230, and an output device 240. In some embodiments, the processor is further in data communication with an optional network interface card 260. Although described separately, it is to be appreciated that functional blocks described with respect to the computer 102a need not be separate structural elements. For example, the processor 210 and memory 220 may be embodied in a single chip.

The processor 210 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 210 can be coupled, via one or more buses, to read information from or write information to memory 220. The processor may additionally, or in the alternative, contain memory, such as processor registers. The memory 220 can include processor cache, including a multi-level hierarchical cache in which different levels have different capacities and access speeds. The memory 220 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 210 also may be coupled to an input device 230 and an output device 240 for, respectively, receiving input from and providing output to a user of the computer 102a. Suitable input devices include, but are not limited to, a keyboard, buttons, keys, switches, a pointing device, a mouse, a joystick, a remote control, an infrared detector, a bar code reader, a scanner, a video camera (possibly coupled with video processing software to, e.g., detect hand gestures or facial gestures), a motion detector, or a microphone (possibly coupled to audio processing software to, e.g., detect voice commands). Suitable output devices include, but are not limited to, visual output devices, including displays and printers, audio output devices, including speakers, headphones, earphones, and alarms, additive manufacturing devices, and haptic output devices.

The processor 210 further may be coupled to a network interface card 260. The network interface card 260 prepares data generated by the processor 210 for transmission via a network according to one or more data transmission protocols. The network interface card 260 also decodes data received via a network according to one or more data transmission protocols. The network interface card 260 can include a transmitter, receiver, or both. In other embodiments, the transmitter and receiver can be two separate components. The network interface card 260, can be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

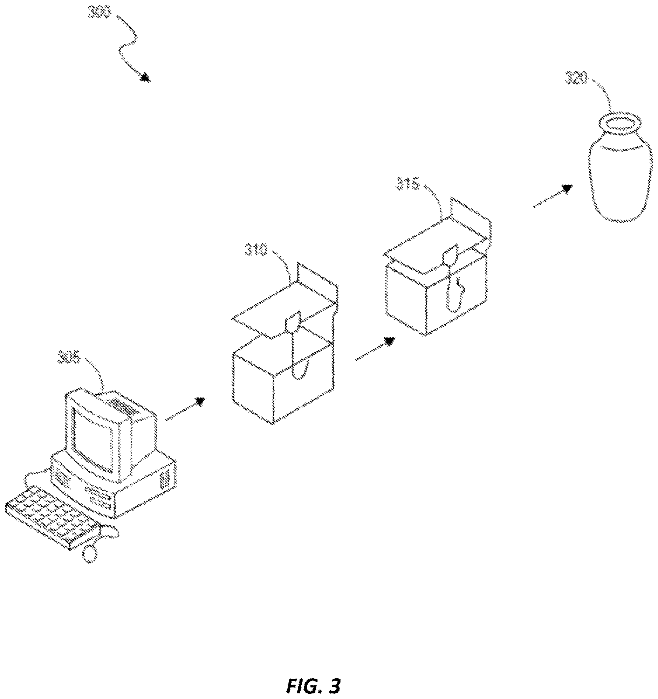

FIG. 3 illustrates a process 300 for manufacturing a 3-D object or device. As shown, at block 305, a digital representation of the object is designed using a computer, such as the computer 102a. For example, 2-D or 3-D data may be input to the computer 102a for aiding in designing the digital representation of the 3-D object. Continuing at block 310, information is sent from the computer 102a to an additive manufacturing device, such as additive manufacturing device 106, and the device 106 commences the manufacturing process in accordance with the received information. At block 315, the additive manufacturing device 106 continues manufacturing the 3-D object using suitable materials, i.e. powder. Further, at block 320, the 3-D object is generated.

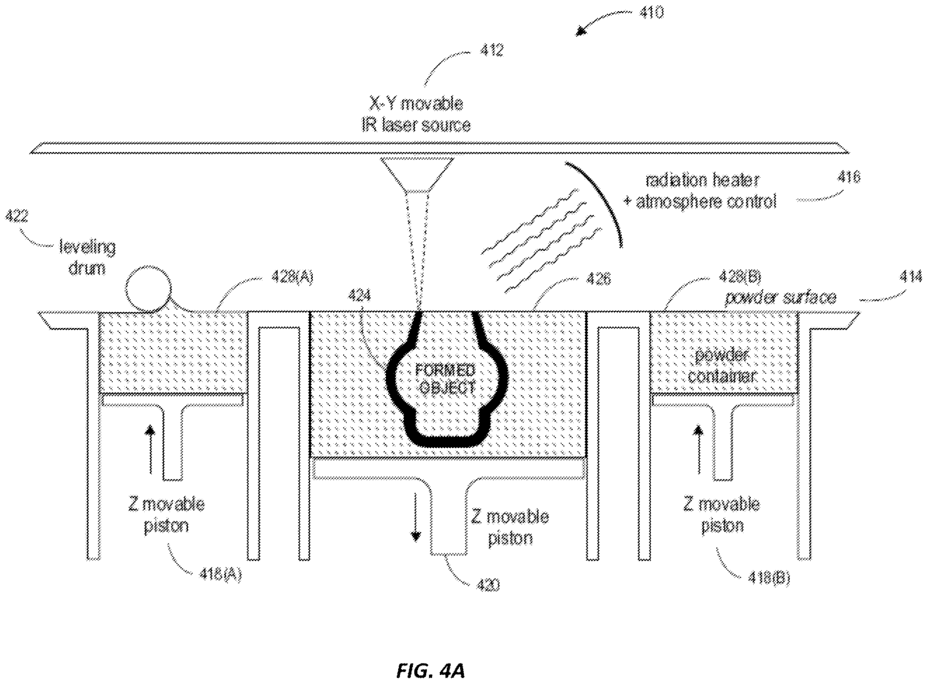

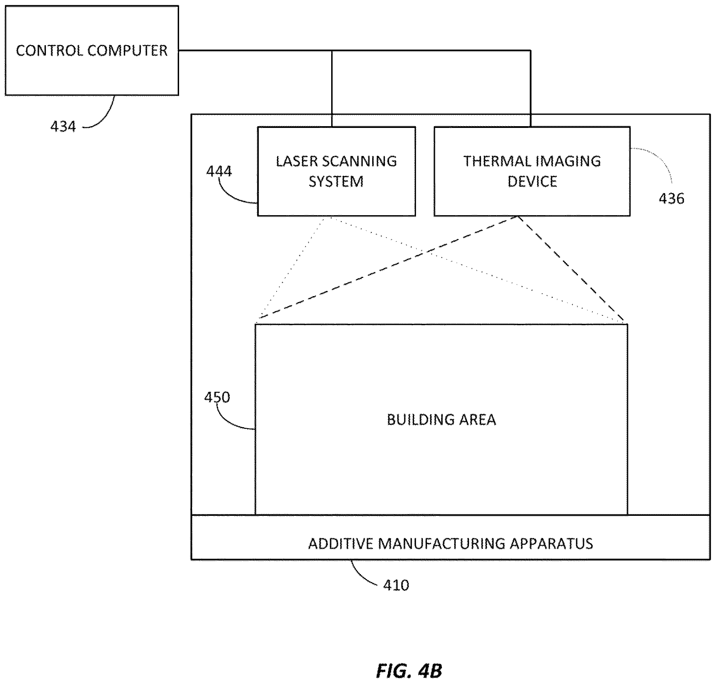

Turning now to Figure 4A, an example of an additive manufacturing apparatus is provided. In this example, the additive manufacturing apparatus is a laser sintering device 410. However, a skilled artisan will readily appreciate that the methods described herein may also be implemented in the context of , laser melting (metals), or even electron-beam melting (EBM). The laser sintering device 410 allows 3D objects to be built layer by layer. The layers are formed of powder, such as the powder surface 414 shown in Figure 4B. Successive powder layers are spread on top of each other using, for example, a leveling drum 422. After deposition, a computer-controlled laser beam, which may be a CO2 laser beam, scans the surface and selectively binds together the powder particles of the corresponding cross section of the product. In this example, the laser source 412 is an X-Y moveable infrared laser source.

As such, the laser source can be moved along an X axis and along a Y axis in order to direct its beam to a specific location of the top most layer of powder. In some embodiments, the laser sintering device may further include a laser scanner (not shown in Figure 4A) which receives a laser beam from a stationary laser source 412, and deflects it over moveable mirrors to direct the beam to a specified location in the working area of the device. During laser exposure, the powder temperature rises above the glass transition point after which adjacent particles flow together to create the 3D object. The device 410 may also include a radiation heater and atmosphere control device 416. The radiation heater may be used to preheat the powder between the recoating of a new powder layer and the scanning of that layer. The atmosphere control device may be used throughout the process to avoid undesired scenarios such as, for example, powder oxidation.

In some embodiments, the powder may be distributed using one or more moveable pistons 418(a) and 418(b) which push powder from a powder container 428(a) and 428(b) into a reservoir 426 which holds the formed object 424. The depth of the reservoir, in turn, is also controlled by a moveable piston 420, which increases the depth of the reservoir 426 via downward movement as additional powder is moved from the powder containers 428(a) and 428(b) in to the reservoir 426.

Figure 4B is a block diagram showing an example of the additive manufacturing apparatus 410 modified to include a thermal imaging device in accordance with various embodiments of the invention. The thermal imaging device may be configured to capture radiation from the surface of the powder bed in the near-infrared (NIR) and/or infrared (IR) range. As shown, the additive manufacturing apparatus 410 (shown in additional detail in Figure 4A) is adapted to communicate with a control computer 434. The control computer 434 may be a computer such as one of the computers described above in connection with Figure 1 and Figure 2. The control computer 434 may be configured with hardware and/or software to control the additive manufacturing process within the additive manufacturing apparatus 410. In some embodiments, the control computer may include an additive manufacturing control processor. The software may be software provided by, for example, Materialise NV of Leuven, Belgium.

The additive manufacturing apparatus 410 is adapted to include both a laser scanning system 444 and a thermal imaging device 436. In certain alternative embodiments, the imaging device can also be a more general imaging device which captured pixelated images of the building area during the build process. As will be discussed in detail below, the thermal imaging device 436 may be configured to capture images of the building area 450 throughout a build process. As is well known by those familiar with thermal cameras, the images captured by the cameras may include data which is directly or indirectly indicative of the temperature of the surface in the building area or can be calibrated to directly measure the temperature of the surface. In some embodiments, the thermal imaging device 436 may be a thermal camera such as a machine vision camera manufactured by FLIR. The machine vision camera may be configured to work in conjunction with a machine vision system incorporated into the control computer 434. In some embodiments, the thermal imaging device 436 may be configured to capture images at a rate of between 0.5 Hz and 50 Hz. Moreover, the thermal imaging device 436 may capture images while the laser scanning system 444 scans the deposited powder layer in the building area 450.

For example, in some embodiments, a typical layer may take around 20 seconds to scan and recoat. During this time, a thermal imaging device 436 configured to capture images at a rate of 10 Hz, will capture around two hundred images for each layer which may be utilized to assess part quality as described below. These images may be stored in a memory on the control computer 434, or in some other memory in a network accessible location, or even in a dedicated memory included with the additive manufacturing apparatus 410. The captured images may be used to determine a thermal history of the manufactured part. This thermal history may be compared to a thermal history of a known master model which has been manufactured, tested, and approved. In general, the thermal history may be expressed as temperature fluctuations for each layer during the scanning and recoating process.

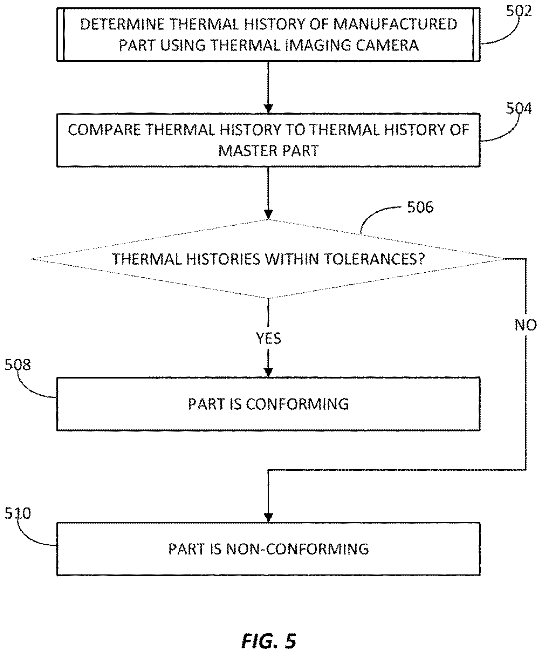

Turning to Figure 5, a flowchart of a high-level process for assessing part quality in additive manufacturing is shown. The process begins at block 502. Here, the thermal history of a manufactured part is determined using thermal imaging data captured by, for example, the thermal imaging device 436. Once the thermal history of the manufactured part has been obtained, it is then compared to the thermal history of a master model as shown in block 504. Next, the process moves to decision block 506. There, a determination may be made as to whether the thermal history of the manufactured part is within specified tolerances. For example, if the thermal history of a particular location in the manufactured part deviates significantly from the thermal history of the master model, this is an indication that the part quality may be suboptimal.

If at decision block 506 the thermal history is not within specified tolerance, the process moves to block 510, where the manufactured part is determined to be nonconforming. However, if the thermal history of the manufactured part is found to be within the specified tolerance, the process then moves to block 508 where the manufactured part is determined to be conforming. In some embodiments, the nonconforming part may be rejected and discarded as part of a broader quality assurance process. Utilizing the process shown in Figure 5, part quality may be assessed without the need for a time-consuming manual, labor-intensive process in the first instance. In some embodiments, the thermal history or more general the history data can also be used for product binning with respect to quality. Products in the build with superior conformity with respect to the master product can be sold at higher prices than its slightly non-conforming counterparts.

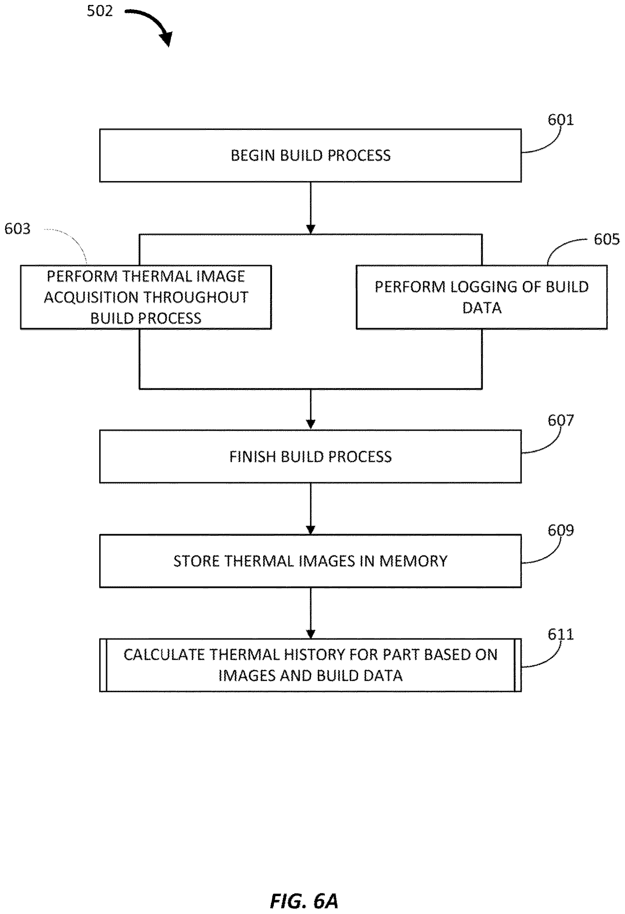

Figure 6A is a flowchart which provides a more detailed example of how the thermal history of a manufactured part may be determined in block 502 of Figure 5 above. The process begins at block 601 where the build process for a part begins. The process then moves two blocks 603 and 605 concurrently. At block 603, the thermal imaging device 436 captures images of the powder bed throughout the build process. As discussed above, in some embodiments, the thermal imaging device 436 may be configured to capture images at a rate of anywhere between 0.5 and 50 Hz. In some embodiments, depending on the particular thermal imaging device used, the image capture rate may be as high as 3000 Hz, or even as low as 0.5 Hz. Further, as thermal imaging technology improves, even higher image capture rates are possible.

While the thermal imaging device 436 captures images of the top layer of the powder bed in the work area, the control computer 434 may be configured in conjunction with the additive manufacturing apparatus and the control software executing on the control computer 434, to perform logging of data relating to various aspects of the build process. These parameters may include parameters such as heater temperature, laser power, scanning speed, the positions on the powder bed visited by the laser, and various types of timing data. The timing data may include data indicative of the precise time that each new layer in the build began to be deposited into the work area. The timing data may also include the precise time at which the deposition of each layer of powder was completed in the process. The timing data may also include the precise time at which scanning of a layer began, and also the time at which scanning of a layer was completed. Of course, these are merely exemplary parameters, and other types of similar data associated with the build process of a manufactured part may also be captured for use in determining the thermal history of the object.

The process continues at block 607, where the build process is completed for the manufactured part. The process next moves to block 609, where the thermal images captured throughout the build process at block 603 may be stored in a memory. As noted above, the memory may be a memory within the additive manufacturing apparatus 410, the control computer 434, some other computer storage area such as a network storage device, or even within the thermal imaging device 436 itself. Next, the process moves to block 611. Here, the thermal history of the manufactured part is calculated based on the acquired images and the logged build data. In some embodiments, the thermal history may be calculated concurrent with the build, and the thermal history may be compared with the thermal history of the master model. As a result, the the build may be halted when there is significant deviation between the thermal history of the master model and the thermal history of the object.

The process of building the thermal history of the manufactured part is described in block 611 may be performed in various ways. Typically, the thermal history is extracted from the data stored in the thermal imaging device 436. In one embodiment, the thermal history is based on a mathematical function, reflecting for each moment in time the temperature behavior as a function of time of a particular point or region in the object.

In another embodiment, the thermal history may be a user defined point or a user defined interval from the above-described mathematical function, reflecting at a moment in time or at a certain time interval, the temperature or the temperature change of a particular region in the object. In yet another embodiment, the thermal history may include constants extracted from the mathematical function reflecting a temperature and one or a plurality of thermal time constants of a particular region in the object. In still other embodiments, the thermal history may reflect a temperature decrease in a predetermined time interval, or alternatively, the time interval needed to reach a certain amount of temperature decrease. In still other embodiments, the thermal history may be the raw temperature data as extracted from the thermal imaging device 436 as a function of time. The data extracted from the thermal imaging device can comprise a temperature, a grey value and a skilled artisan will appreciate that other parameters could be used, such as a gray value or an input from another monitoring camera.

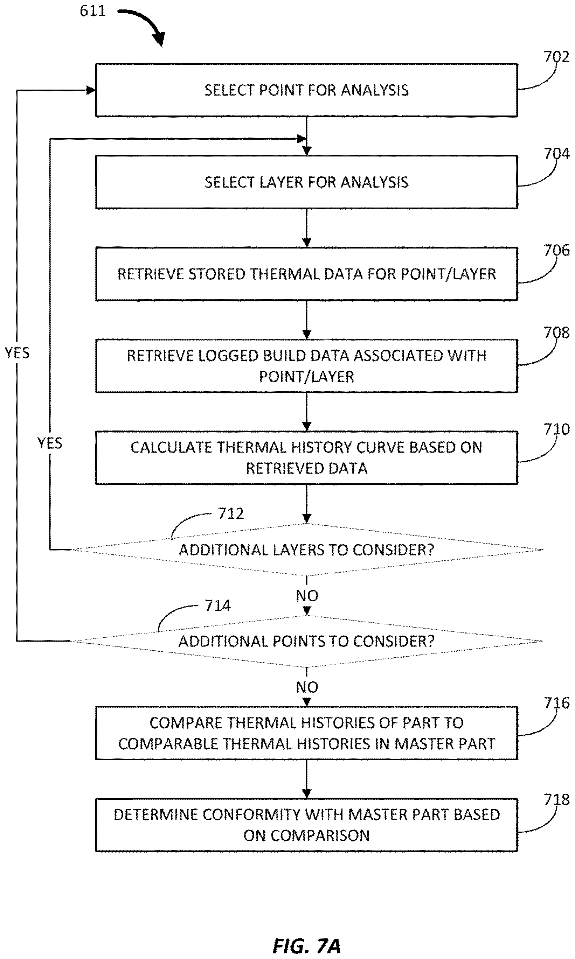

Figure 7A is one example of a sub process that may be employed to calculate the thermal history of the manufactured part. Because the thermal history of the manufactured part may be used as a basis for comparison with the thermal history of the master model, it is desirable that data used to compare the manufactured part with the master model should reflect conditions in the build process at the closest possible times in each build. However, because of the adaptive control system, the speed of the laser, the relative scanning order of the parts, variations in the preheating time of layer due to humidity in the powder, the images captured by the thermal imaging device 436 may not be captured at the exact relative time across multiple build processes. As discussed above, the thermal imaging device 436 may be configured to capture images only at a rate of between 10 Hz and 50 Hz. However, the laser scanner works more quickly than this, and may visit many points on the object layer between image captures. As a result, merely comparing data from images taken by the thermal imaging device 436 will not ensure that the data obtained from the manufactured object and the master object will give meaningful results. Rather, in order to ensure an "apples-to-apples" comparison, the images captured by the thermal imaging device 436 can be synchronized so that they can be compared effectively.

Thus, in some embodiments, the asynchronous images captured by the thermal imaging device 436 are not directly compared with the images captured during the build process of the master model. Rather, a thermal history curve may be generated based on the logged build data, timing data, and/or the acquired images. In some particular embodiments, the thermal history curve may be generated based on the acquired images and a reference time. Using a reference time allows for fitting or applying the above-described mathematical model to the thermal data and working with the constants resulting from the fit. The thermal data can be fitted with a mathematical model or a thermal model. In one embodiment, the model that could be used is described by T(t) = A*exp(-lambda*t) + B, in which A represents the maximum temperature reached for the point, lambda is the exponential decay factor, indicating how fast the temperature diminishes after the laser has moved away, and B is a constant. The constant B may represent the ambient/equilibrium temperature that is reached over time. Additional exponential factors or other factors may also be used where appropriate.

In some embodiments, a mathematical model may also be a generic model comprising parameters that have proven to result in a good build in the past. By working with the constants from the mathematical equation, a new type of image may be constructed that is decoupled from the timestamp. Doing so allows for the timing parameter to be eliminated, and an "apples-to-apples" comparison to be made. The constants may then be compared with the constants from a master model. This approach can also be utilized using the temperature from the thermal images, a corresponding time stamp (w.r.t. to a reference) and a thermal behavior model (i.e. 1 exponential or more). In sum, using the adaptive control system of the additive manufacturing apparatus 410, several different data parameters may be measured and utilized to interpolate and/or simulate a temperature value for all parts of the build process.

As described above, in one embodiment, the thermal history may be described or expressed as a mathematical function, reflecting for each moment in time the temperature behavior as a function of time of a particular region in the object. In another embodiment, the thermal history may be a user defined point or a user defined interval from the above mentioned mathematical function, reflecting at a moment in time or at a certain time interval, the temperature or the temperature change of a particular region in the object. In yet another embodiment, the thermal history comprises constants extracted from the mathematical function reflecting a temperature and one or a plurality of thermal time constants of a particular region in the object. In yet another embodiment, the thermal history reflects a temperature drop in a predetermined time interval or alternatively the time interval needed to reach a certain temperature drop. Additionally, working with the thermal history allows for a strong data reduction in comparison with working with the thermal data from the imaging device 436.

Figure 7A is a flowchart providing one example of a process for defining a thermal history for a manufactured part, and then utilizing that defined thermal history to compare the part quality to that of a master model. At a high-level, the process involves, for each point in the part, creating a thermal history curve that shows the temperature at each moment in time throughout the build process. The process begins at block 702, where a point in the part is selected for analysis. The point may be determined by selecting a specific location from the electronic model of the part. Next, the process moves to block 704, where a specific layer from the build process is selected for analysis. Thus, at box 702 and 704, a specific location and specific layer in the manufactured part are selected for analysis. Next, using the data captured during the build process, is retrieved from memory. For example, at block 706, the thermal data associated with the point and layer under consideration is retrieved from memory. At block 708, build data that was logged while manufacturing the part and which is associated with the layer under consideration is also retrieved from memory.

As explained above, the thermal imaging device 436 is typically not capable of capturing images at a rate that ensures that an image is taken for each and every point visited by the laser scanner. As a result, the images taken by the thermal imaging device 436 are not taken at exactly the same relative moment in each build. For example, in the build process which produced the master model, the images may have been captured at one relative point in time in the process, while in later produced parts, the images may be captured at different relative times. Because of these different relative times, a comparison of images between the master model and subsequently produced parts will not lead to a reliable assessment of part quality. In order to ensure that the image data and build process data can be meaningfully compared between different parts, a thermal history may be generated which adjusts the captured data so that it may be used in an "apples-to-apples" comparison.

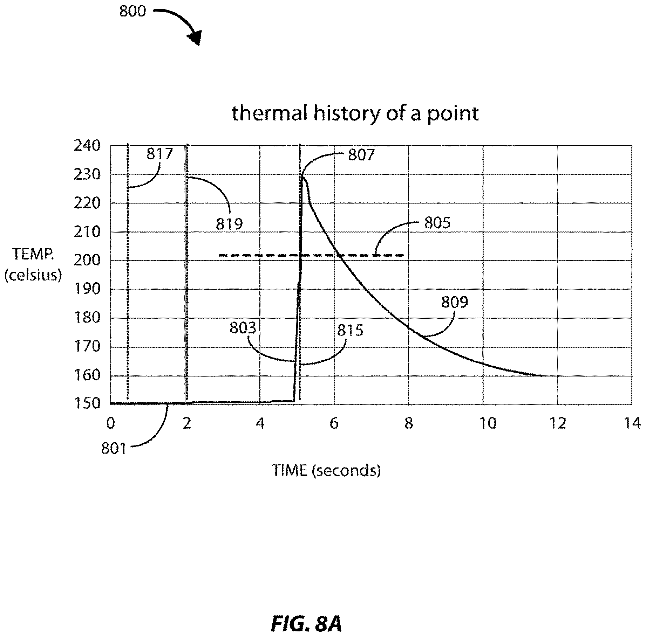

In order to achieve this comparison, the process then moves to block 710, where a thermal history curve is determined based on the retrieved data. In some embodiments, the thermal history curve may be represented by a graph such as the graph 800 shown in Figure 8A. As shown the thermal history curve is represented on an x y graph with the x-axis representing time (in seconds) and the y-axis representing temperature (in centigrade). Although temperature and time are used in this example, a skilled artisan will appreciate that other parameters could be used, such as a gray value or an input from another monitoring camera. In this example, the time shown in the graph reflects the total time of the additive manufacturing apparatus 410 took to scan the layer under consideration. The temperature value reflects the temperature of the point under consideration. Thus, the plotted line on the x y graph 800 provides the localized temperature of the point under consideration as a function of time. This plotted line is generally representative of different states during the scan cycle for the layer under consideration.

The first state, marked as 801 in the graph, reflects the time during which the layer has been recoated, but the scanner has not yet reached the point. As a result, the temperature is relatively low, and generally at or near the temperature of the deposited powder in the powder bed. As the laser scanner moves toward the point under consideration, the temperature may slightly increase (as shown) due to the growing proximity of the beam to the point. When the point under consideration is scanned by the laser, the temperature rapidly increases (as shown in section 803) of the plotted line. The temperature increases past the melting point of the powder (dashed line 805) and peaks at position 807. Once the scanner has moved on to another point in the object, the temperature begins falling (due to its thermal diffusion properties) as shown in section 809 of the line. This line may be considered the thermal history of the point under consideration. As described above, the thermal history of the point under consideration comprises a mathematical function, reflecting for each moment in time the temperature behavior as a function of time of a particular region in the object. In another embodiment, the thermal history may be a user defined point or a user defined interval from the above mentioned mathematical function, reflecting at a moment in time or at a certain time interval, the temperature or the temperature change of a particular region in the object. In yet another embodiment, the thermal history comprises constants extracted from the mathematical function reflecting a temperature and one or a plurality of thermal time constants of a particular region in the object. In yet another embodiment, the thermal history reflects a temperature drop in a predetermined time interval or alternatively the time interval needed to reach a certain temperature drop. In yet another embodiment, the asynchronicity is lifted by cutting of the steep edge raising edge on the graph in Figure 8A.

The thermal history from Figure 8A may be initially created using the actual thermal measurements taken during the build process. However, the stored data that is logged during the build process also provides additional information, especially as it relates to the timing of events. For example, the build process information logged by the system may include precise timing of various events related to the layer and point under consideration. This information may include the precise time at which the recoater deposited the powder for the layer. Figure 8A shows this time as the dashed line 817. This information may also include the moment laser scanning commenced on the layer. Figure 8A represents this time as dashed line 819. The information may further include the precise time at which the laser scanned the point under consideration. This specific time is shown as dashed line 815 in Figure 8A. The timing of other events may also be recorded and utilized to determine an appropriately synchronized thermal history.

Utilizing this and other recorded information, as well as the physics behind thermal diffusivity that takes place, the thermal history curve from Figure 8A may be extrapolated and simulated even though actual thermal measurements were not taken for each and every moment in the process. To illustrate, in some instances, the thermal imaging device 434 may not capture an image at the precise time that the laser scans the point under consideration. It is generally at this point where the temperature of the point will be at its highest. In the example shown in Figure 8A, the thermal imaging device did not capture an image at the precise moment (indicated by dashed line 815) that the laser scanned the point under consideration.

Rather, the thermal imaging device captured thermal images just before and just after the scanner hit the point under consideration. Accordingly, the precise time that the scanner hit the point under consideration is known, and the thermal behavior of the material at that point can be fitted using an assumed thermal model, the temperature at the precise time the laser scanned the point under consideration can be estimated and/or extrapolated based on this information, and then added as a XY value for plotting on the curve. Other values on the thermal history curve may be similarly estimated and/or extrapolated using the captured and logged data.

Now turning back to the flowchart shown in Figure 7A, once the thermal history has been calculated for the point/layer under consideration, the process moves to decision block 712. There a determination is made as to whether there are additional layers that may be analyzed for the point under consideration. If so, the process returns to block 704, and the next layer is selected for analysis. If at decision block 712, there are no additional layers that may be analyzed for the point under consideration, the process moves forward to decision block 714. In decision block 714, a determination is made whether there are additional points in the object for which a thermal history curve can be generated. If so, the process returns to block 702, where a new point in the object is selected for analysis. If however, at decision block 714 there are no additional points in the object to consider, the process moves forward to block 716.

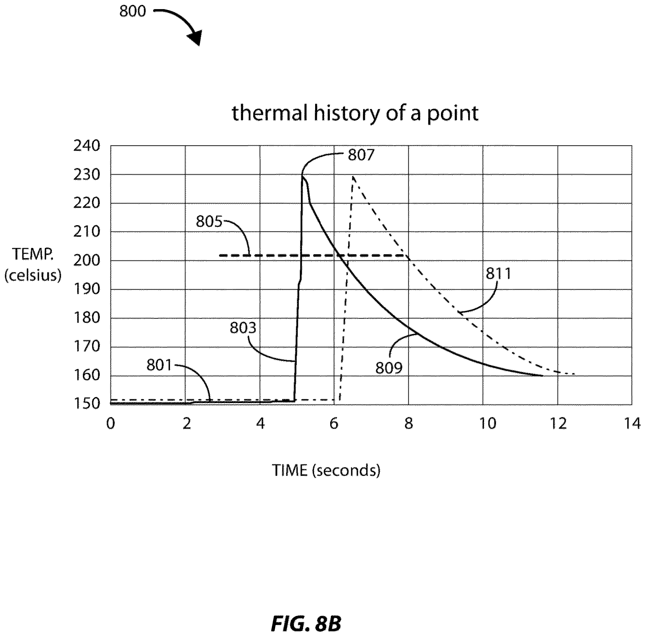

At block 716, the thermal histories generated for the manufacture part may be compared to the thermal histories of the master model. Figure 8B shows the thermal history from Figure 8A along with the absolute thermal history of the master model superimposed without any synchronization. The thermal history of the master model is shown in the dashed line 811, which is offset in time from the thermal history of the part produced in connection with Figure 8A. However, the two thermal histories can be synchronized by fitting with the mathematical model and extraction of the fit constants. Those fit constants are time independent. As such, for each point, the fit constants can be compared. Examples of fit constants but not limiting are the maximum temperature or the exponential decay time. Thus, these adjustments may be accomplished by utilizing the information captured and logged during the build process to align the thermal histories so they reflect equivalent moments in time. Finally, the process moves to block 718 where, based on the similarities in the thermal histories between the part and the master model, a determination is made as to whether the part is conformal to the master model.

In some embodiments, the conformity of the build may be checked during the build process in near real-time. In these embodiments, as images are captured and build process data is stored, thermal histories can be generated in real-time and compared with the master model. If there is a significant deviation, the build can be stopped without incurring further wasted time and effort on that particular item. In some embodiments, the build may be adjusted to remedy the detected defect.

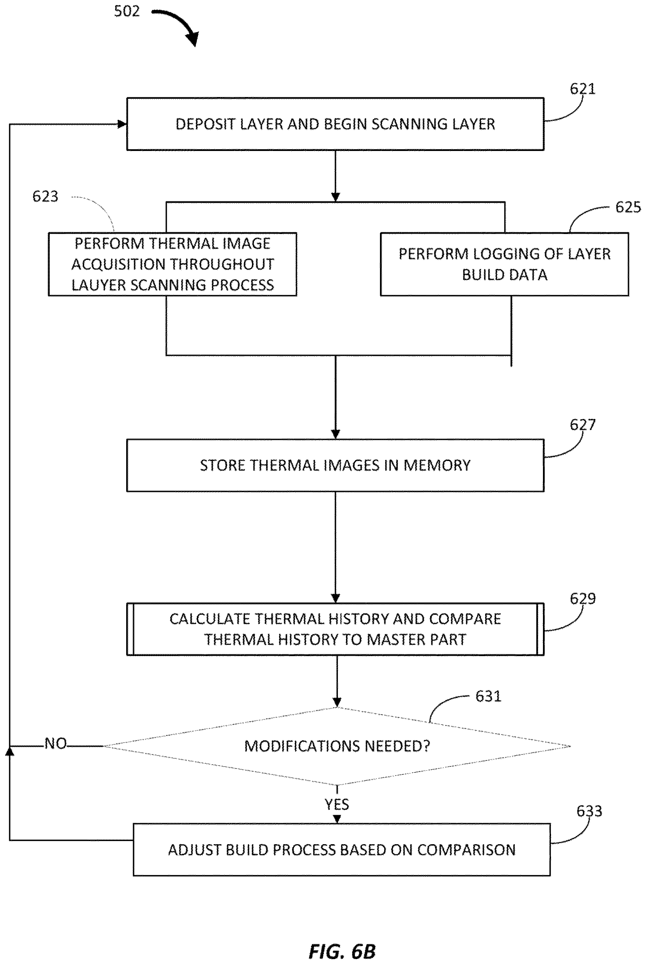

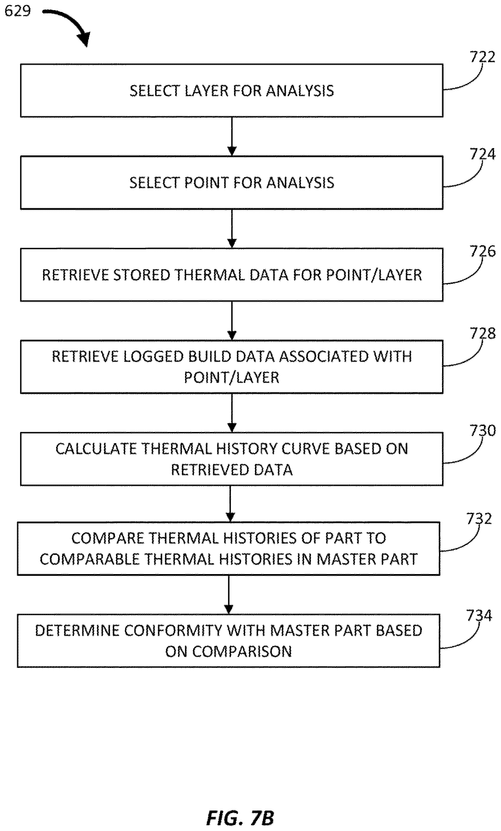

Figures 6B and 7B provide examples of real-time processing of thermal histories. Turning to Figure 6B, the real-time processing begins at block 621, where a layer is deposited in the building area and scanned by the additive manufacturing apparatus 410. Next, the process moves two blocks 623 and 625 concurrently. At block 623, thermal images are acquired as the layer is scanned. At the same time, build process data is also logged as shown in block 625. Next, the process moves to block 627 were thermal images are stored in memory. The process then moves to block 629, where the thermal history of the layer is calculated in real time based on the stored images and build data, and then be calculated thermal history is compared to that of the master part. The process next moves to decision block 631, where based on the outcome of the comparison that took place in block 629, a determination of whether modifications to the build process are needed is made. If no modifications are needed, e.g., the thermal history of the new part conforms to that of the master part, the process returns to block 621 where the next layer is deposited and scanned. If, however, modifications are needed, the process then moves to block 633 where the build process is adjusted based on the types of deviations from the master part. These adjustments may include adjustments to the scanner speed, scanner power, layer thickness, or some other additive manufacturing parameter capable of adjustment by the additive manufacturing device 410.

Figure 7B is a sub process of block 629 from Figure 6B, and shows a flowchart describing in more detail a process by which the thermal history may be calculated in a real-time environment. The process begins at block 722. There, the currently printed layer is selected for analysis. Next, the process moves to block 724, where a particular point within the layer is identified for analysis. The process then moves to block 726 where the stored thermal data for the identified point/layer is retrieved from memory and at block 728 the logged build data is also retrieved. Next, the process moves to block 730, where the thermal history curve is calculated based on the retrieved data. Once the thermal history curve has been calculated, is compared to the comparable thermal history in the master part at block 732. At block 734, conformity with the master part is determined based on the comparison made in block 732. In this real-time context, as pointing each layer are scanned, thermal histories for those points can be generated and evaluated against the master part. When deviations from the norm are identified, an opportunity to adjust the manufacturing process may be presented, in order to avoid the waste of printer resources on what would otherwise become a defective part. In addition, were deviations from the norm are significant enough, the printing process may be terminated, also saving resources and time.

In still other embodiments, the thermal image data may be compressed using mathematical compression functions to reduce the thermal image data to one or two images per layer.

Although the embodiments described above relate to selective laser sintering (SLS), a skilled artisan will readily appreciate that the systems and methods disclosed herein may be used in other types of additive manufacturing, including SLA, EBM, metal sintering, and the like.

In some embodiments, the systems and methods described herein may be used to check part quality based on how long each point in the manufacture part has stayed above the melting temperature. If the thermal history associated with a point in the part reveals that it was above the melting point for an insufficient amount of time, it can reveal that the part is likely to have too much porosity. Similarly, if the temperature was above the melting point for too long of a time, it can provide an indication that there may be distortions in the part due to excess melting.

In some embodiments, the systems and methods described herein may be used to check part quality based on the `fit factor', which reflects how good the assumed thermal model can be fitted within the measured experimental data for that point. If for instance the fit factor is high the assumed thermal model describes well the measured thermal behavior, but if it is low, although parameters have been fitted, it does not accurately describe the real situation. Examples of `fit factors' in statistics are the R-squared value, which is close to zero with a bad fit and close to 1 with a good fit.

Utilizing the systems and methods disclosed herein, manufactured parts can be reliably compared to a master model, even when the build process is not sampled in the same way that was done during the master build. Applying the techniques disclosed herein, a thermal history may be created for each manufacture part which is based on equivalent parameters as those defined for the master model. Moreover, although the systems and methods described herein generally relate to the use of a thermal imaging device, a skilled artisan will appreciate that a more general imaging device may be used as well. In these implementations, rather than using thermal readings to determine part quality, pixel values in raw images may be compared between the master model and the manufactured part to determine conformity as well.

Various embodiments disclosed herein provide for the use of a computer control system. A skilled artisan will readily appreciate that these embodiments may be implemented using numerous different types of computing devices, including both general purpose and/or special purpose computing system environments or configurations. Examples of well-known computing systems, environments, and/or configurations that may be suitable for use in connection with the embodiments set forth above may include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like. These devices may include stored instructions, which, when executed by a microprocessor in the computing device, cause the computer device to perform specified actions to carry out the instructions. As used herein, instructions refer to computer-implemented steps for processing information in the system. Instructions can be implemented in software, firmware or hardware and include any type of programmed step undertaken by components of the system.

A microprocessor may be any conventional general purpose single- or multi-chip microprocessor such as a Pentium^{®} processor, a Pentium^{®} Pro processor, a 8051 processor, a MIPS^{®} processor, a Power PC^{®} processor, or an Alpha^{®} processor. In addition, the microprocessor may be any conventional special purpose microprocessor such as a digital signal processor or a graphics processor. The microprocessor typically has conventional address lines, conventional data lines, and one or more conventional control lines.

Aspects and embodiments of the inventions disclosed herein may be implemented as a method, apparatus or article of manufacture using standard programming or engineering techniques to produce software, firmware, hardware, or any combination thereof. The term "article of manufacture" as used herein refers to code or logic implemented in hardware or non-transitory computer readable media such as optical storage devices, and volatile or non-volatile memory devices or transitory computer readable media such as signals, carrier waves, etc. Such hardware may include, but is not limited to, field programmable gate arrays (FPGAs), application-specific integrated circuits (ASICs), complex programmable logic devices (CPLDs), programmable logic arrays (PLAs), microprocessors, or other similar processing devices.

## Claims

1. A quality control system for assessing quality of a manufactured part (424) in an additive manufacturing apparatus (106, 410), comprising:
a laser scanning system (444);
a thermal imaging device (436);
a control computer (434),
wherein the control computer is configured to:
initiate laser scanning of a building area (450) in the additive manufacturing apparatus in order to manufacture the part by scanning successive layers of powder deposited by a recoating device (422) of the apparatus;
cause the thermal imaging device to capture images of at least a portion of the building area during the laser scanning of the building area;
store the captured images as thermal data in a memory;
store the build process data in the memory;
derive a thermal history for a point in the part from the stored captured images and build process data, by selecting the point for consideration, retrieving the stored thermal data and the stored build process data associated with the selected point and calculating a thermal history curve (800) for the point for consideration based on the retrieved data, such that the derived thermal history comprises temperature as a function of time for the point during laser scanning and recoating; and
compare the derived thermal history (800) with a comparable stored thermal history (811) associated with a master model,
wherein, a comparison of the derived thermal history with the stored thermal history indicates whether the part is conformal to the master model.

2. The quality control system of Claim 1, wherein a determination that the part is conformal to the master model is dependent upon whether the thermal history of the point in the part is within predefined tolerances.

3. The quality control system of Claim 1 or 2, wherein the calculation of the thermal history curve (800) for the point comprises an extrapolation of temperature values indicative of the temperature at the location of the point throughout scanning of a layer of the manufactured part.

4. The quality control system of Claim 3, wherein the comparison of the derived thermal history with the stored thermal history comprises a comparison of the amounts of time the temperature at the location of the point exceeded a predefined reference temperature in each of the derived thermal history and the stored thermal history.

5. The quality control system of Claim 4, wherein the predefined reference temperature is a melting point of the powder used to manufacture at least one of the manufactured part and the master model.

6. The quality control system of Claim 5, wherein the calculation of the thermal history curve is a real-time calculation, and wherein the control computer is further configured to modify the parameters associated with one or more subsequent layers in the build process based on the calculated thermal history curve.

7. A method of assessing quality of a part manufactured in an additive manufacturing apparatus (106, 410), the method comprising:
initiating laser scanning of a building area (450) in the additive manufacturing apparatus in order to manufacture the part by scanning successive layers of powder deposited by a recoating device (422) of the apparatus;
causing a thermal imaging device (436) to capture images of at least a portion of the building area during the laser scanning of the building area;
storing the captured images as thermal data in a memory;
storing the build process data in the memory;
deriving a thermal history for a point in the part from the stored captured images and build process data, by selecting the point for consideration, retrieving the stored thermal data and the stored build process data associated with the selected point and calculating a thermal history curve (800) for the point for consideration based on the retrieved data, such that the derived thermal history comprises temperature as a function of time for the point during laser scanning and recoating; and
comparing the derived thermal history (800) with a comparable stored thermal history (811) associated with a master model,
wherein, a comparison of the derived thermal history with the stored thermal history indicates whether the part is conformal to the master model.

8. The method of Claim 7, further comprising determining that the part is conformal to the master model if the thermal history of the point in the part is within predefined tolerances.

9. The method of Claim 7 or 8, wherein calculating the thermal history curve (800) for the point comprises extrapolating temperature values indicative of the temperature at the location of the point throughout scanning of a layer of the manufactured part.

10. The method of Claim 9, wherein comparing the derived thermal history with the stored thermal history comprises comparing the amounts of time the temperature at the location of the point exceeded a predefined reference temperature in each of the derived thermal history (800) and the stored thermal history (811).

11. The method of Claim 10, wherein the predefined reference temperature is a melting point of the powder used to manufacture at least one of the manufactured part and the master model.

12. The method of Claim 11, wherein calculating the thermal history curve is performed in real-time, and wherein the method further comprises modifying the parameters associated with one or more subsequent layers in the build process based on the calculated thermal history curve.

## Patentansprüche

1. Ein Qualitätskontrollsystem zum Beurteilen von Qualität eines gefertigten Teils (424) in einer Einrichtung zur additiven Fertigung (106, 410), umfassend:
- ein Laser-Scansystem (444);
- ein Wärmebildgebungsvorrichtung (436);
- einem Steuerungsrechner (434),
- wobei der Steuerungsrechner konfiguriert ist, um:
- Laserscannen einer Baufläche (450) in der Einrichtung zur additiven Fertigung zu initiieren, um das Teil durch Scannen aufeinanderfolgender Pulverschichten zu fertigen, die von einer Wiederbeschichtungsvorrichtung (422) der Einrichtung abgeschieden werden;
- die Wärmebildgebungsvorrichtung zu veranlassen, während des Laserscannens der Baufläche Bilder von mindestens einem Abschnitt der Baufläche aufzunehmen;
- die aufgenommenen Bilder als Wärmedaten in einem Speicher zu speichern;
- die Bauprozessdaten im Speicher zu speichern.
- eine Wärmehistorie für einen Punkt in dem Teil aus den gespeicherten aufgenommenen Bildern und Bauprozessdaten durch Auswählen des zu prüfenden Punktes, Abrufen der gespeicherten Wärmedaten und der gespeicherten Bauprozessdaten, die mit dem ausgewählten Punkt verknüpft sind, und Berechnen einer Wärmehistorienkurve (800) für den zu prüfenden Punkt basierend auf den abgerufenen Daten abzuleiten, so dass die abgeleitete Wärmehistorie die Temperatur in Abhängigkeit von Zeit für den Punkt während des Laserscannens und der Wiederbeschichtung umfasst; und
- die abgeleitete Wärmehistorie (800) mit einer vergleichbaren gespeicherten Wärmehistorie (811), die mit einem Mastermodell verknüpft ist, zu vergleichen,
- wobei ein Vergleich der abgeleiteten Wärmehistorie mit der gespeicherten Wärmehistorie darauf hinweist, ob das Teil konform mit dem Mastermodell ist.

2. Das Qualitätskontrollsystem nach Anspruch 1, wobei ein Bestimmen, dass das Teil konform mit dem Mastermodell ist, davon abhängt, ob die Wärmehistorie des Punkts im Teil innerhalb vordefinierter Toleranzen liegt.

3. Das Qualitätskontrollsystem nach Anspruch 1 oder 2, wobei das Berechnen der Wärmehistorienkurve (800) für den Punkt eine Extrapolation von Temperaturwerten umfasst, die auf die Temperatur an der Stelle des Punkts während des gesamten Scannens einer Schicht des gefertigten Teils hinweisen.

4. Das Qualitätskontrollsystem nach Anspruch 3, wobei der Vergleich der abgeleiteten Wärmehistorie mit der gespeicherten Wärmehistorie einen Vergleich der Zeiten umfasst, in denen die Temperatur an der Stelle des Punkts eine vordefinierte Referenztemperatur in jeder von der abgeleiteten Wärmehistorie und der gespeicherten Wärmehistorie überschritten hat.

5. Das Qualitätskontrollsystem nach Anspruch 4, wobei die vordefinierte Referenztemperatur ein Schmelzpunkt des Pulvers ist, das zur Fertigung von mindestens einem der gefertigten Teile und des Mastermodells verwendet wird.

6. Das Qualitätskontrollsystem nach Anspruch 5, wobei die Berechnung der Wärmehistorienkurve eine Echtzeitberechnung ist, und wobei der Steuerungsrechner weiter konfiguriert ist, um die mit einer oder mehreren nachfolgenden Schichten im Bauprozess verknüpften Parameter basierend auf der berechneten Wärmehistorienkurve zu ändern.

7. Ein Verfahren zum Beurteilen von Qualität eines gefertigten Teils in einer Einrichtung zur additiven Fertigung (106, 410), wobei das Verfahren umfasst:
- Initiieren von Laserscannen einer Baufläche (450) in der Einrichtung zur additiven Fertigung, um das Teil durch Scannen aufeinanderfolgender Pulverschichten zu fertigen, die von einer Wiederbeschichtungsvorrichtung (422) der Einrichtung abgeschieden werden;
- Veranlassen einer Wärmebildgebungsvorrichtung (436), während des Laserscannens der Baufläche Bilder von mindestens einem Abschnitt der Baufläche aufzunehmen;
- Speichern der aufgenommenen Bilder als Wärmedaten in einem Speicher;
- Speichern der Bauprozessdaten im Speicher;
- Ableiten einer Wärmehistorie für einen Punkt in dem Teil aus den gespeicherten aufgenommenen Bildern und Bauprozessdaten durch Auswählen des zu prüfenden Punktes, Abrufen der gespeicherten Wärmedaten und der gespeicherten Bauprozessdaten, die mit dem ausgewählten Punkt verknüpft sind, und Berechnen einer Wärmehistorienkurve (800) für den zu prüfenden Punkt basierend auf den abgerufenen Daten, so dass die abgeleitete Wärmehistorie die Temperatur in Abhängigkeit von Zeit für den Punkt während des Laserscannens und der Wiederbeschichtung umfasst; und
- Vergleichen der abgeleiteten Wärmehistorie (800) mit einer vergleichbaren gespeicherten Wärmehistorie (811), die mit einem Mastermodell verknüpft ist,
- wobei ein Vergleich der abgeleiteten Wärmehistorie mit der gespeicherten Wärmehistorie darauf hinweist, ob das Teil konform mit dem Mastermodell ist.

8. Das Verfahren nach Anspruch 7, das weiter Bestimmen umfasst, dass das Teil konform mit dem Mastermodell ist, wenn die Wärmehistorie des Punkts im Teil innerhalb vordefinierter Toleranzen liegt.

9. Das Verfahren nach Anspruch 7 oder 8, wobei Berechnen der Wärmehistorienkurve (800) für den Punkt Extrapolieren von Temperaturwerten umfasst, die auf die Temperatur an der Stelle des Punkts während des gesamten Scannens einer Schicht des gefertigten Teils hinweisen.

10. Das Verfahren nach Anspruch 9, wobei Vergleichen der abgeleiteten Wärmehistorie mit dem gespeicherten Wärmehistorie Vergleichen der Zeiten umfasst, in denen die Temperatur an der Stelle des Punkts eine vordefinierte Referenztemperatur in jeder von der abgeleiteten Wärmehistorie (800) und der gespeicherten Wärmehistorie (811) überschritten hat.

11. Das Verfahren nach Anspruch 10, wobei die vordefinierte Referenztemperatur ein Schmelzpunkt des Pulvers ist, das zur Fertigung von mindestens einem der gefertigten Teile und des Mastermodells verwendet wird.

12. Das Verfahren nach Anspruch 11, wobei Berechnen der Wärmehistorienkurve in Echtzeit durchgeführt wird, und wobei das Verfahren weiter Ändern der Parameter umfasst, die mit einer oder mehreren nachfolgenden Schichten im Bauprozess verknüpft sind, basierend auf der berechneten Wärmehistorienkurve.

## Revendications

1. Un système de contrôle qualité pour évaluer la qualité d'une pièce fabriquée (424) dans un appareil de fabrication additive (106, 410), comprenant :
un système de balayage laser (444) ;
un dispositif d'imagerie thermique (436) ;
un ordinateur de contrôle (434),
dans lequel l'ordinateur de contrôle est configuré pour :
initier un balayage laser d'une zone de construction (450) dans l'appareil de fabrication additive afin de fabriquer la pièce par balayage de couches successives de poudre déposées par un dispositif de revêtement (422) de l'appareil ;
amener le dispositif d'imagerie thermique à capturer des images d'au moins une partie de la zone de construction pendant le balayage laser de la zone de construction ;
stocker les images capturées sous forme de données thermiques dans une mémoire ;
stocker les données du processus de construction dans la mémoire ;
déduire un historique thermique pour un point de la pièce à partir des images capturées stockées et des données du processus de construction, en sélectionnant le point à prendre en compte, en récupérant les données thermiques stockées et les données du processus de construction stockées associées au point sélectionné et en calculant une courbe d'historique thermique (800) pour le point à prendre en compte sur la base des données récupérées, de telle sorte que l'historique thermique déduit comprenne la température en fonction du temps pour le point pendant le balayage laser et le revêtement ; et
comparer l'historique thermique déduit (800) à un historique thermique stocké comparable (811) associé à un modèle maître,
dans lequel, une comparaison de l'historique thermique déduit à l'historique thermique stocké indique si la pièce est conforme au modèle maître.

2. Le système de contrôle qualité selon la revendication 1, dans lequel une détermination selon laquelle la pièce est conforme au modèle maître dépend du fait que l'historique thermique du point dans la pièce se situe dans des tolérances prédéfinies.

3. Le système de contrôle qualité selon la revendication 1 ou 2, dans lequel le calcul de la courbe d'historique thermique (800) pour le point comprend une extrapolation de valeurs de température indicatives de la température à l'emplacement du point tout au long du balayage d'une couche de la pièce fabriquée.

4. Le système de contrôle qualité selon la revendication 3, dans lequel la comparaison de l'historique thermique déduit à l'historique thermique stocké comprend une comparaison des quantités de temps pendant lesquelles la température à l'emplacement du point a dépassé une température de référence prédéfinie dans chacun de l'historique thermique déduit et de l'historique thermique stocké.

5. Le système de contrôle qualité selon la revendication 4, dans lequel la température de référence prédéfinie est un point de fusion de la poudre utilisée pour fabriquer au moins l'une de la pièce fabriquée et du modèle maître.

6. Le système de contrôle qualité selon la revendication 5, dans lequel le calcul de la courbe d'historique thermique est un calcul en temps réel, et dans lequel l'ordinateur de contrôle est en outre configuré pour modifier les paramètres associés à une ou plusieurs couches ultérieures dans le processus de construction sur la base de la courbe d'historique thermique calculée.

7. Un procédé d'évaluation de la qualité d'une pièce fabriquée dans un appareil de fabrication additive (106, 410), le procédé comprenant :
l'initiation d'un balayage laser d'une zone de construction (450) dans l'appareil de fabrication additive afin de fabriquer la pièce par balayage de couches successives de poudre déposées par un dispositif de revêtement (422) de l'appareil ;
le fait d'amener un dispositif d'imagerie thermique (436) à capturer des images d'au moins une partie de la zone de construction pendant le balayage laser de la zone de construction ;
le stockage des images capturées sous forme de données thermiques dans une mémoire ;
le stockage des données du processus de construction dans la mémoire ;
la déduction d'un historique thermique pour un point de la pièce à partir des images capturées stockées et des données du processus de construction, en sélectionnant le point à prendre en compte, en récupérant les données thermiques stockées et les données du processus de construction stockées associées au point sélectionné et en calculant une courbe d'historique thermique (800) pour le point à prendre en compte sur la base des données récupérées, de telle sorte que l'historique thermique déduit comprenne la température en fonction du temps pour le point pendant le balayage laser et le revêtement ; et
la comparaison de l'historique thermique déduit (800) à un historique thermique stocké comparable (811) associé à un modèle maître,
dans lequel, une comparaison de l'historique thermique déduit à l'historique thermique stocké indique si la pièce est conforme au modèle maître.

8. Le procédé selon la revendication 7, comprenant en outre la détermination que la pièce est conforme au modèle maître si l'historique thermique du point dans la pièce est dans des tolérances prédéfinies.

9. Le procédé selon la revendication 7 ou 8, dans lequel le calcul de la courbe d'historique thermique (800) pour le point comprend l'extrapolation de valeurs de température indicatives de la température à l'emplacement du point tout au long du balayage d'une couche de la pièce fabriquée.

10. Le procédé selon la revendication 9, dans lequel la comparaison de l'historique thermique déduit à l'historique thermique stocké comprend la comparaison des quantités de temps pendant lesquelles la température à l'emplacement du point a dépassé une température de référence prédéfinie dans chacun de l'historique thermique déduit (800) et de l'historique thermique stocké (811).

11. Le procédé selon la revendication 10, dans lequel la température de référence prédéfinie est un point de fusion de la poudre utilisée pour fabriquer au moins l'un de la pièce fabriquée et du modèle maître.

12. Le procédé selon la revendication 11, dans lequel le calcul de la courbe d'historique thermique est effectué en temps réel, et dans lequel le procédé comprend en outre la modification des paramètres associés à une ou plusieurs couches ultérieures dans le processus de construction sur la base de la courbe d'historique thermique calculée.
